# FASCICULE DE BREVET EUROPEEN

(11) **EP 3 515 870 B1**
(45) Date de publication et mention de la délivrance du brevet: **17.02.2021**
(21) Numéro de dépôt: 17780831.8
(22) Date de dépôt: 22.09.2017
(51) Int. Cl.: C03C 15/02

(54) **PROCÉDÉ POUR AMÉLIORER LA TENUE AU FLUX LASER D'UN COMPOSANT OPTIQUE**
VERFAHREN ZUR VERBESSERUNG DER BESTÄNDIGKEIT GEGEN DEN LASERFLUSS EINES OPTISCHEN BAUTEILS
METHOD FOR IMPROVING THE RESISTANCE TO LASER FLUX OF AN OPTICAL COMPONENT

(30) Priorité: 23.09.2016 FR 1658944
(43) Date de publication de la demande: 31.07.2019
(73) Titulaire: Commissariat à l'énergie atomique et aux énergies alternatives, 75015 Paris (FR)
(72) Inventeur: BELLEVILLE, Philippe, 37000 Tours (FR); LAMBERT, Sébastien, 37800 Saint-Epain (FR); PFIFFER, Mathilde, 33160 Saint Medard en Jalles (FR); CORMONT, Philippe, 33110 Le Bouscat (FR)
(74) Mandataire: Brevalex
(86) Numéro de dépôt international: PCT/FR2017/052551
(87) Numéro de publication internationale: WO 2018/055303

(56) Documents cités:
- EP-B1- 0 693 186
- WO-A1-2014/195472
- TAYYAB I. SURATWALA ET AL: "HF-Based Etching Processes for Improving Laser Damage Resistance of Fused Silica Optical Surfaces", JOURNAL OF THE AMERICAN CERAMIC SOCIETY., vol. 94, no. 2, 14 février 2011 (2011-02-14), pages 416-428, XP055359965, US ISSN: 0002-7820, DOI: 10.1111/j.1551-2916.2010.04112.x

## Description

### DOMAINE TECHNIQUE

La présente invention se rapporte au domaine général des composants optiques et, en particulier, au domaine de la fabrication et du traitement des composants optiques pour les chaînes laser.

Plus particulièrement, la présente invention propose un procédé de traitement permettant d'obtenir un composant optique présentant une tenue au flux laser améliorée comparée à la tenue au flux laser d'un composant optique, de nature et de forme identiques, non traité. Ce procédé consiste à traiter le composant optique avec une solution corrosive alcaline particulière.

### ÉTAT DE LA TECHNIQUE ANTÉRIEURE

La difficulté de fabrication des composants optiques pour les chaînes laser réside dans la nécessité d'avoir, d'une part, une forme parfaite pour ne pas déformer le front d'onde du laser et, d'autre part, une excellente tenue au flux pour éviter que le composant optique ne s'endommage aux fortes puissances du laser notamment dans l'ultraviolet.

Pour atteindre des hautes performances en tenue au flux, de nouvelles méthodes de fabrication du matériau ont été nécessaires comme celles décrites dans les demandes internationales WO 2013/071021 **[1]** et WO 98/07053 **[2]** qui ont permis d'augmenter la résistance de la silice fondue, matériau principalement utilisé sur les chaînes laser de puissance. Plus particulièrement, la méthode décrite dans la demande internationale WO 2013/071021 **[1]** consiste à mettre en contact le verre à traiter avec une solution aqueuse acide pratiquement dépourvue de fluor et présentant un pH inférieur ou égal à 3. La demande internationale WO 98/07053 **[2]** propose un procédé pour rendre les éléments optiques résistant au compactage causé par une exposition prolongée à un faisceau laser UV. Ce procédé consiste à soumettre les éléments optiques à un pré-compactage comme, par exemple, une irradiation avec un rayon laser à haute fluence avant toute utilisation.

De nouveaux procédés de surfaçage et de polissage ont aussi été mis au point dans le but principalement de réduire les fractures sous-surfaciques à chaque étape de fabrication **[3]** et d'enlever les contaminants à la surface des optiques **[4].** Ces deux éléments, présents lors des fabrications traditionnelles des composants optiques, ont en effet été identifiés comme des précurseurs de l'endommagement par laser.

L'attaque chimique par acide a été identifiée comme une méthode efficace pour enlever les contaminants de surface et ainsi améliorer la tenue au flux des optiques il y a de nombreuses années **[5,6].** Cette technique a, depuis lors, été améliorée à travers plusieurs brevets **[3,7].** Ainsi le brevet US 6,099,389 **[3]** propose un procédé dans lequel la surface est, tout d'abord, abrasée pour éliminer une première couche de dommages sous-surfaciques avant d'être soumise à une attaque chimique par acide puis d'être à nouveau polie. L'objectif de l'attaque chimique après le polissage est alors uniquement d'enlever les contaminants et éventuellement la fine couche de polissage contenant ces contaminants, comme expliqué dans la demande de brevet JP 2002/286902 **[7].** L'épaisseur de cette couche est de moins de 1 µm; c'est pour cela que, lors de l'attaque chimique, l'enlèvement de silice est faible de l'ordre de 2 µm **[3]** ce qui permet de ne pas détériorer la forme parfaite de la surface optique.

En 2010, Suratwala *et al* **[8]** ont montré qu'une attaque chimique plus profonde i.e. supérieure à 20 µm permet d'améliorer encore fortement la tenue au flux des optiques en silice si elle est réalisée dans certaines conditions. Dans cette publication, l'attaque chimique est mise en œuvre en employant des bains corrosifs contenant de l'acide fluorhydrique (HF). Cette méthode pour améliorer la tenue au flux des optiques en silice a fait l'objet de la demande de brevet US 2011/079931 **[9]** en l'étendant à l'attaque chimique par des solutions aqueuses comprenant un acide minéral tel que l'acide nitrique (HNO₃), l'acide chlorhydrique (HCl), l'acide perchlorique (HClO₄), l'acide sulfurique (H₂SO₄) et l'acide phosphorique (H₃PO₄). Les conditions d'attaque chimique étudiées par Suratwala *et al* **[8]** comme la température, la concentration de la solution, l'agitation dans des bains à ultrasons et la durée de rinçage sont déterminantes pour ne pas laisser de résidus de la réaction chimique à la surface, résidus qui détériorent la tenue au flux. Cette attaque chimique profonde permet d'améliorer la tenue au flux des optiques car elle élimine les fractures des fines rayures laissées par le polissage. Cette solution présente cependant un premier inconvénient lié à l'augmentation de la rugosité de la surface **[10].** De plus, d'un point de vue industriel, cette solution est coûteuse à mettre en œuvre à cause des dispositions nécessaires pour prévenir des risques associés à l'utilisation de l'acide fluorhydrique.

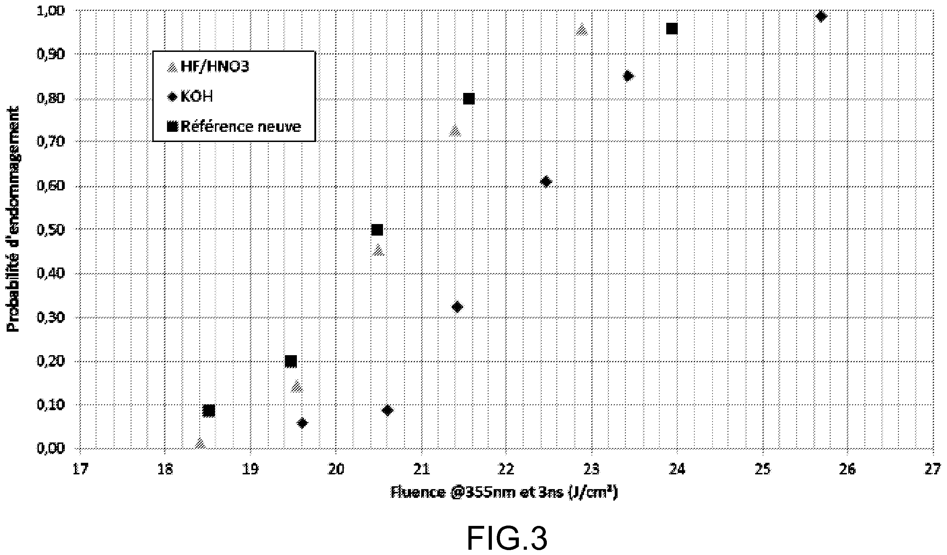

Comme l'acide fluorhydrique présente des risques graves pour la santé, des solutions alternatives pour éroder les verres ont aussi été étudiées il y a de nombreuses années. A titre d'exemple, Khan *et al,* 1978 **[11]** ont étudié et comparé des solutions d'attaque pour des détecteurs nucléaires solides. Ces solutions comprennent soit du difluorure d'ammonium ((NH₄)HF₂), soit de l'hydroxyde de sodium (NaOH) ou de l'hydroxyde de potassium (KOH), ces derniers étant utilisés sous forme de solutions aqueuses bouillantes présentant une concentration de 30%, 50%, 60% ou 75% en masse de NaOH ou de KOH. A noter que lorsqu'une solution bouillante comprenant du NaOH ou du KOH à une concentration de 30% en masse est utilisée, le temps de contact minimal avec le verre est de 325 min et de 475 min respectivement (Figure 3 de **[11]**).

Pour obtenir des composants en silice résistants au laser, l'attaque chimique utilisée se fait essentiellement par acide alors que, dans le domaine de la microélectronique, l'attaque par des solutions alcalines semble être plus intéressante que par acide.

En effet, l'attaque chimique sur les verres est largement utilisée pour la texturation de surface notamment dans le domaine de la microélectronique. Cette texturation s'effectue en utilisant les propriétés d'attaque sélective en fonction des propriétés des verres, propriétés qui sont modifiées localement par un pré-traitement qui peut se faire de multiples façons, comme par exemple un traitement de charge par effet corona **[12].**

Le KOH présentant moins de risque pour la santé que le HF, il est étudié pour le remplacer dans certaines applications comme, par exemple, pour réaliser des microcanaux dans des verres **[13].** Dans ce cas, Kiyama *et al* ont noté qu'un avantage du KOH est aussi un taux d'enlèvement de matière plus important et une meilleure sélectivité qu'avec l'HF sur du verre pré-traité par laser femtoseconde. Cependant, ces applications utilisant le KOH pour faire une attaque chimique des verres ne concernent pas la tenue au flux par laser et se font avec des enlèvements moins profonds que pour la méthode décrite dans **[8].**

Le brevet EP 0 693 186 B1 **[17]** décrit un procédé de traitement qui consiste à plonger le substrat dans une solution alcaline choisie parmi la soude (NaOH), la potasse (KOH), le tétraméthylammonium hydroxyde (N(CH₃)₄OH), l'hydroxylamine (NH₂OH), la diéthanolamine (NH(CH₂OHCH₂)₂) ou l'ammoniac (NH₄OH). Ces solutions alcalines sont diluées dans un solvant faiblement dissociant. Ce procédé est réalisé à température ambiante et permet de durcir le dépôt de couches sol-gel pour améliorer leurs propriétés de résistance à l'abrasion.

Enfin, la solution proposée dans la demande internationale WO 2015/052556 **[14]** utilise le KOH sur des composants optiques pour des lasers de puissance mais cette méthode est en fait proche de la méthode décrite dans **[8].** En effet, le KOH n'est utilisé que pour un nettoyage préalable, l'attaque chimique qui va améliorer la tenue au flux est faite par un mélange acide HF/HNO₃. Elle ne résout donc pas les inconvénients mentionnés précédemment pour la méthode décrite dans **[8].**

Les inventeurs se sont donc fixé pour but de proposer un procédé pour améliorer la tenue au flux laser des composants optiques et notamment des verres, facile à mettre en œuvre et présentant un faible coût et peu de risques pour la santé des manipulateurs.

### EXPOSÉ DE L'INVENTION

Les inventeurs ont atteint le but fixé et proposent un procédé de traitement corrosif de composants optiques permettant d'améliorer la tenue au laser de ces derniers, ledit procédé ne présentant pas les inconvénients et désavantages des procédés de l'art antérieur.

En effet, les inventeurs ont montré que l'utilisation d'une solution corrosive alcaline mise en contact avec un verre permet d'améliorer la tenue au flux laser de ce dernier, tout en contrôlant l'enlèvement de matière d'une profondeur inférieure au micron jusqu'à une profondeur de plusieurs microns de manière à maintenir les fonctionnalités du verre et en particulier sa transparence. Il s'agit là d'une nouvelle application ou utilisation d'une solution corrosive alcaline. En effet, il n'est pas fait mention dans l'état de la technique de l'utilisation d'une telle solution corrosive pour traiter des optiques afin d'en améliorer la tenue au laser.

Le traitement corrosif alcalin tel que décrit par la présente invention permet de pallier très avantageusement les nombreux inconvénients des traitements corrosifs acides utilisés jusqu'à présent non seulement pour améliorer la tenue au laser des optiques mais aussi pour décontaminer les optiques ou éliminer un traitement de surface des optiques.

En effet, il est mis en évidence qu'à l'opposé d'un traitement corrosif acide, le traitement corrosif alcalin tel que décrit dans la présente invention permet d'éroder d'une épaisseur de quelques nanomètres à plusieurs microns, la surface d'un composant optique tout en maintenant ses propriétés fonctionnelles dont la transparence (absence d'effet de diffusion optique) et d'améliorer significativement la tenue au flux laser de ce composant optique. De plus, le traitement corrosif alcalin tel que décrit dans la présente invention permet d'améliorer la mouillabilité des composants optiques et notamment des composants optiques silicates, les rendant aptes à l'application, dans de meilleures conditions, d'un post-traitement de surface tel qu'un décapage, le dépôt d'une couche, le dépôt de peinture, un vernissage, un collage, ou encore une impression. Le traitement corrosif alcalin tel que décrit dans la présente invention permet également de maintenir voire d'améliorer la rugosité de surface.

Les résultats de ce traitement alcalin mentionnés ci-dessous n'ont pas été décrits précédemment et ne sont ni évidents, ni prévisibles et encore moins attendus par l'homme du métier. En d'autres termes, la simple substitution de l'agent corrosif, à savoir un acide substitué par une base, ne permettait pas d'anticiper l'ensemble de ces résultats, même pour l'homme du métier. Le traitement corrosif alcalin tel que décrit dans la présente invention procure de nombreux effets positifs et avantages, qu'il n'était pas envisageable d'escompter ou de prévoir.

Ainsi, la présente invention concerne un procédé pour améliorer les propriétés de tenue au flux laser d'un composant optique comprenant une étape consistant à mettre en contact ledit composant avec une solution aqueuse comprenant au moins un hydroxyde d'un métal alcalin ou d'un métal alcalino-terreux en une quantité en masse comprise entre 5 et 30% et présentant une température T comprise entre 50 et 100°C, ledit composant optique étant en un matériau choisi dans le groupe constitué par un verre silicaté, un verre borosilicaté, un verre aluminosilicaté, un verre boroaluminosilicaté, une silice fondue et un verre à base de phosphate, et ledit composant optique étant choisi dans le groupe constitué par les verres laser, les polariseurs, les miroirs, les lentilles, les optiques diffractives comme les réseaux et lames de phase, et les hublots.

La tenue au flux laser d'un composant optique peut être définie comme le seuil de résistance du composant optique à une certaine densité d'énergie du laser. Une haute tenue au flux laser d'un composant optique dénote alors la propension de ce dernier à ne pas subir d'effets irréversibles plus ou moins importants lorsque l'on augmente la densité d'énergie du laser jusqu'à des valeurs d'énergie élevées. Les effets irréversibles sont, par exemple, l'apparition de dommages, tels que des craquelures, des brisures, des éclats ou des cratères, en volume ou en surface du composant optique qui dégradent progressivement les caractéristiques du faisceau. Les dommages en surface peuvent exister aussi bien en face avant qu'en face arrière par rapport au sens de propagation du faisceau laser. Ces modifications en volume ou en surface du composant optique sont définies comme l'endommagement laser.

Par « améliorer les propriétés de tenue au flux laser », on entend que le composant optique suite au procédé de l'invention i.e. le composant optique ayant subi un traitement par une solution aqueuse comprenant au moins un hydroxyde d'un métal alcalin ou d'un métal alcalino-terreux en une quantité en masse comprise entre 5 et 30% et présentant une température comprise entre 50 et 100°C, présente, suite à une exposition à un flux laser, une meilleure tenue au laser par rapport à un composant optique de même nature (même composition, même forme et mêmes pré-traitements éventuels) non traité et exposé à un flux laser identique. Cette amélioration peut être mise en évidence ou quantifiée par des techniques bien connues de l'homme du métier.

En effet, la tenue au flux laser d'un échantillon est déterminée généralement en effectuant des tirs laser sur cet échantillon et en notant la variation de certains paramètres optiques comme la diffusion ou l'absorption ou en observant directement l'apparition de dommages microscopiques en volume ou en surface de l'échantillon. Ces mesures ou observations permettent de déterminer un endommagement éventuel et de déterminer le comportement d'un composant optique soumis à un flux laser d'une puissance surfacique déterminée. Plusieurs modes de tirs laser peuvent être utilisés. La norme NF EN ISO 11254 définit deux de ces modes qui sont le plus souvent utilisés. Selon un premier mode, on augmente progressivement la puissance entre deux tirs sur un même point jusqu'à l'apparition d'un dommage. Ce mode présente l'avantage de limiter le nombre de points nécessaires pour obtenir une bonne statistique. Cependant, il génère un phénomène de conditionnement, dont l'origine est mal connue, qui a tendance à majorer la tenue au flux. Selon un second mode, on effectue un tir unique par point à une puissance donnée puis on détermine le nombre de sites endommagés. Ceci permet de s'affranchir du phénomène de conditionnement mais demande un plus grand nombre de points de mesures. La fluence exacte de chaque point de mesure est relevée et l'ensemble des tirs effectués sont classés par ordre croissant de fluence. Cet ensemble de tirs est divisé en sous-ensembles comprenant chacun le même nombre de tirs. La probabilité d'endommagement est calculée pour chaque sous-ensemble en utilisant la procédure de traitement des données introduite par Jensen *et al,* 2015 **[15]** pour réduire les erreurs statistiques en augmentant de façon fictive le nombre de données. Cette procédure est basée sur deux hypothèses : (1) un site non endommagé aurait également résisté à une irradiation avec une fluence inférieure et (2) un site endommagé aurait également été endommagé à une irradiation à une fluence supérieure. La probabilité ainsi obtenue pour chaque sous-ensemble est associée à la moyenne des fluences des tirs constituant ce sous ensemble. En utilisant une telle méthode avec un laser présentant une longueur d'onde de 355 nm, une impulsion de 3 ns et une fluence (densité surfacique d'énergie) comprise entre 19 et 22 J/cm², la probabilité d'endommagement en face arrière par rapport au sens de propagation du faisceau laser d'un composant optique traité par le procédé objet de la présente invention est diminuée d'au moins 10%, d'au moins 20%, d'au moins 30%, d'au moins 40% et d'au moins 50% par rapport à la probabilité d'endommagement en face arrière par rapport au sens de propagation du faisceau laser d'un composant optique non traité.

La présente invention s'applique à tout composant optique destiné à être exposé à un flux laser et choisi dans le groupe constitué par les verres laser, les polariseurs, les miroirs, les lentilles, les optiques diffractives comme les réseaux et lames de phase, et les hublots.

Le matériau du composant optique traité par le procédé selon l'invention est un verre silicaté, un verre borosilicaté, un verre aluminosilicaté, un verre boroaluminosilicaté, une silice fondue ou un verre à base de phosphate. Avantageusement, le matériau du composant optique traité par le procédé selon l'invention n'est pas un verre sodocalcique. Plus avantageusement encore, le matériau du composant optique traité par le procédé selon l'invention est une silice fondue.

Le composant optique que l'on souhaite traiter conformément au procédé de la présente invention peut présenter une taille et une forme quelconques. En particulier, ce composant optique peut être une optique notamment une optique en silice fondue telle que celles mises en œuvre dans les grandes installations utilisant des lasers de forte puissance.

Préalablement à la mise en œuvre du procédé selon la présente invention, le composant optique n'a subi aucun traitement du type gravure physique et notamment gravure physique par un laser comme un laser femtoseconde ou du type traitement de charge par effet corona. Par contre, le composant optique susceptible d'être traité par un procédé selon la présente invention peut avoir subi, préalablement à la mise en œuvre de ce procédé, un traitement du type polissage, du type abrasion ou du type dépôt d'un revêtement de surface comme un revêtement de surface ayant une fonction d'anti-reflet.

Le procédé selon la présente invention utilise une solution corrosive alcaline particulière. En effet, cette dernière consiste en une solution aqueuse comprenant au moins un hydroxyde d'un métal alcalin ou d'un métal alcalino-terreux en une quantité en masse comprise entre 5 et 30% et présentant une température comprise entre 50 et 100°C.

Les expressions « métal alcalin » et « métal alcalino terreux » sont utilisées dans leur acceptation habituelle, à savoir celle du tableau périodique des éléments. Avantageusement, dans le cadre de la présente invention, un métal alcalin est choisi dans le groupe constitué par le sodium (Na), le potassium (K), le lithium (Li) et le césium (Cs). Un métal alcalino-terreux avantageusement utilisé dans la présente invention est le calcium (Ca).

Ainsi, la solution aqueuse comprenant au moins un hydroxyde d'un métal alcalin ou d'un métal alcalino-terreux est notamment choisie parmi une solution aqueuse d'hydroxyde de sodium (NaOH), une solution aqueuse d'hydroxyde de potassium (KOH), une solution aqueuse d'hydroxyde de calcium (Ca(OH)₂), une solution aqueuse d'hydroxyde de lithium (LiOH), une solution aqueuse d'hydroxyde de césium (CsOH) et leurs mélanges.

Dans la solution corrosive alcaline mise en œuvre dans le cadre de la présente invention, l'hydroxyde d'un métal alcalin ou d'un métal alcalino-terreux est présent en une quantité en masse comprise entre 5 et 30%. Lorsque la solution corrosive alcaline comprend au moins deux hydroxydes de métaux alcalins différents, au moins deux hydroxydes de métaux alcalino-terreux différents ou au moins un hydroxyde d'un métal alcalin et au moins un hydroxyde d'un métal alcalino-terreux, la quantité totale en masse de ces hydroxydes est comprise, dans cette solution corrosive alcaline, entre 5 et 30%.

Plus particulièrement, le procédé selon la présente invention comprend les étapes successives suivantes :
a) préparer une solution aqueuse comprenant au moins un hydroxyde d'un métal alcalin ou d'un métal alcalino-terreux en une quantité en masse comprise entre 5 et 30% et présentant une température T comprise entre 50 et 100°C ; et
b) mettre en contact le composant optique avec la solution préparée à l'étape (a), ladite mise en contact étant effectuée à ladite température T.

L'homme du métier connaît différentes façons de préparer une solution aqueuse comprenant au moins un hydroxyde d'un métal alcalin ou d'un métal alcalino-terreux telle que précédemment définie soit en diluant ou en mélangeant des compositions commerciales existantes, soit en les préparant de façon extemporanée. Cette dernière alternative consiste notamment à dissoudre au moins un hydroxyde d'un métal alcalin ou d'un métal alcalino-terreux dans de l'eau qui peut aussi bien être de l'eau désionisée, de l'eau distillée que de l'eau ultra-pure (18,2 MΩ). Typiquement, la dissolution de l'hydroxyde d'un métal alcalin ou d'un métal alcalino-terreux ou des hydroxydes de métaux alcalins ou de métaux alcalino-terreux est réalisée dans de l'eau distillée ou de l'eau ultra-pure (18,2 MΩ). Cette dissolution peut être favorisée en chauffant la solution et/ou en l'agitant. Si une agitation est mise en œuvre, cette dernière peut être une agitation mécanique, une agitation magnétique ou une agitation par ultrasons. A cet effet, un malaxeur, un agitateur, un barreau magnétique, un bain à ultrasons ou un homogénéisateur peuvent être utilisés et ce, dans le but d'obtenir une solution homogène.

La solution ainsi préparée est portée à la température T choisie entre 50°C et 100°C à ± 2°C près. Cette température T appelée « température de traitement » est supposée être atteinte lorsque la mesure de la température de la solution corrosive alcaline effectuée à l'aide d'un moyen de métrologie adapté comme, par exemple un thermomètre, conduit à une valeur proche de la température désirée pendant 15 min, aux incertitudes de mesure près.

Dans le procédé selon l'invention, la mise en contact entre le composant optique et la solution corrosive alcaline peut se faire par tout moyen permettant un traitement uniforme de ou des surface(s) du composant optique à traiter par la solution corrosive telle que précédemment définie.

Cette mise en contact consiste typiquement à plonger et à maintenir le composant optique dans la solution corrosive alcaline et, en particulier, à plonger à la verticale et à maintenir à la verticale le composant optique dans la solution corrosive alcaline. A cet effet, il peut être judicieux d'utiliser un élément de maintien permettant de manipuler le composant optique sans risque de dommages ou de contamination. Cet élément de maintien peut se présenter sous forme d'une ceinture en un matériau chimiquement inerte vis-à-vis de la solution corrosive alcaline comme, par exemple, en Téflon®.

En variante, et notamment lorsque seule une face du composant optique doit être soumise à un traitement conforme à la présente invention, il est possible de déposer un certain volume de solution corrosive alcaline sur la face du composant à traiter ou d'utiliser un intermédiaire de diffusion i.e. un support solide poreux et chimiquement inerte vis-à-vis de la solution corrosive alcaline, comme décrit dans la demande internationale WO 2014/195472 **[16].**

Dans le procédé selon l'invention, la mise en contact entre le composant optique et la solution corrosive alcaline se fait sous agitation. En d'autres termes, lors de la mise en contact, la solution corrosive alcaline est soumise à une agitation. Cette dernière peut être une agitation mécanique, une agitation magnétique ou une agitation par ultrasons. A cet effet, un malaxeur, un agitateur, un barreau magnétique, un bain à ultrasons ou un homogénéisateur peuvent être utilisés et ce, dans le but de maintenir l'homogénéité de la solution corrosive alcaline et d'éviter le dépôt ou le maintien de produits résultant de la corrosion au niveau de la surface du composant optique.

La mise en contact entre le composant optique et la solution corrosive alcaline présente une durée inférieure à 24 h, notamment inférieure à 22 h et, en particulier, inférieure à 20 h. Avantageusement, cette mise en contact présente une durée comprise entre 10 min et 18 h et notamment entre 20 min et 16 h.

Dans le cadre du procédé selon l'invention et plus particulièrement durant l'étape de mise en contact, il est nécessaire de compléter le volume de solution en permanence avec de l'eau ultra-pure ou déminéralisée, afin de compenser l'évaporation induite par la température de la solution supérieure à 50°C. Tout dispositif permettant de maintenir une concentration constante de la solution corrosive par condensation des vapeurs notamment (montage au reflux) peut être utilisé avantageusement.

De plus, dans le cadre du procédé selon l'invention et plus particulièrement durant l'étape de mise en contact, il est nécessaire de maintenir la température de la solution corrosive alcaline à la température de traitement telle que précédemment définie. A cet effet, la mise en contact est réalisée en présence d'un élément chauffant et de moyens de régulation de température aptes à maintenir ledit élément chauffant à une température de consigne, choisie de façon à ce que, lorsque ladite température de consigne est obtenue et maintenue, la température de la solution corrosive alcaline est maintenue à la température de traitement.

A la fin du procédé selon l'invention i.e. une fois la durée de la mise en contact entre le composant optique et la solution corrosive alcaline écoulée, le composant optique est soumis à un rinçage de façon à éliminer toute trace de solution corrosive alcaline. Ce rinçage est typiquement effectué avec de l'eau désionisée, de l'eau distillée ou de l'eau ultra-pure (18,2 MΩ) et, plus particulièrement, avec de l'eau distillée ou de l'eau ultra-pure (18,2 MΩ). Le composant optique une fois rincé est mis à sécher dans un environnement propre et ce, pour éviter toute contamination solide ou liquide de la surface du composant optique traité.

D'autres caractéristiques et avantages de la présente invention apparaîtront encore à l'homme du métier à la lecture des exemples ci-dessous donnés à titre illustratif et non limitatif, en référence à la figure unique annexée.

### BRÈVE DESCRIPTION DES DESSINS

La Figure 1 présente la caractérisation par le système DMS des échantillons avant (Figure 1A) et après traitement chimique à l'aide soit d'une solution acide d'HF/HNO₃ (Figure 1B) ou avant (Figure 1C) et après traitement chimique à l'aide soit d'une solution basique au KOH (Figure 1D).
La Figure 2 présente la topographie de surface et valeurs de rugosité correspondantes obtenues pour des échantillons avant («Neuf»; Figure 2A) et après traitement chimique à l'aide soit d'une solution basique au KOH (« Traité au KOH » ; Figure 2B), soit d'une solution acide d'HF/HNO₃ (« Traité au HF/HNO₃ » ; Figure 2C).
La Figure 3 présente la probabilité d'endommagement des échantillons avant (« référence neuve ») et après traitement chimique à l'aide soit d'une solution acide d'HF/HNO₃ (« HF/HNO₃ »), soit d'une solution basique au KOH (« KOH »).

### EXPOSÉ DÉTAILLÉ DE MODES DE RÉALISATION PARTICULIERS

### I. Préparation de la solution corrosive.

Pour préparer une solution corrosive à base d'hydroxyde de potassium (KOH) pour une concentration de 30% en masse, on dissout à chaud 150 g de pastilles de KOH (AnalaR NORMAPUR 26688.296 ou équivalent) avec 350 ml d'eau ultra-pure ou distillée dans un bécher de 500 ml de contenance. Pour favoriser cette opération et améliorer l'homogénéité de la solution, une agitation manuelle ou magnétique est utilisée en complément du chauffage de la solution. La solution est utilisable lorsque l'ensemble des pastilles ont été dissoutes. Ce volume de solution est spécialement adapté pour les essais décrits ci-dessous des composants optiques de forme circulaire de diamètre de 50 mm.

La solution ainsi préparée est portée à la température de traitement désirée. Dans les exemples ci-après, cette température est de 100°C. La solution est ainsi déclarée « solution corrosive de traitement » dans la suite. La température de celle-ci doit être maintenue à la température désirée tout au long des opérations ci-après.

### II. Traitement du composant optique.

Le composant optique à traiter est inséré dans un système de préhension adapté, permettant une manipulation sans risque de contamination (ceinture). L'utilisation d'un dispositif en Téflon© est recommandée en veillant à avoir le moins de prise de contact possible avec le composant optique. Le tout est appelé dans la suite « composant ceinturé ».

Le composant ceinturé est ensuite plongé à la verticale dans la solution corrosive de traitement. Cette étape peut conduire à une variation de température de la solution corrosive de traitement. Il est nécessaire alors d'adapter la température de consigne du moyen chauffant. Le composant ceinturé est ainsi maintenu pendant le temps du traitement, sous agitation.

A titre d'exemple, pour éroder 1 µm de silice, le composant ceinturé reste en place environ 45 min dans une solution corrosive de traitement à 30% en masse de KOH maintenue à 100°C.

Pendant le temps du traitement, de l'eau ultra-pure ou déminéralisée est ajoutée à la solution corrosive de traitement, afin de compenser l'évaporation induite par la température de la solution supérieure à 50°C. A cet effet, un montage à reflux est utilisé.

Une fois le temps de traitement atteint, il est nécessaire de relever le composant ceinturé de la solution et de le rincer abondamment avec de l'eau ultra-pure ou distillée. Afin de sécher le composant optique, le composant ceinturé est conservé à la verticale dans un environnement propre.

### III. Avantages du procédé.

### 111.1. Matériel et Méthodes.

Afin de montrer les avantages, sont présentés ci-après les résultats obtenus sur 3 échantillons. Les échantillons analysés sont trois disques de silice fondue polie de 50 mm de diamètre. Le premier a été érodé en surface, pendant une durée comprise entre 7 et 10 h, grâce à une solution chimique à base d'acide fluorhydrique HF et d'acide nitrique HNO₃. Cette solution est une solution aqueuse dont le solvant est de l'eau ultra-pure et comprenant un rapport massique de HF/HNO₃ de 1/8. Le second a été érodé, pendant une durée comprise entre 7 et 10 h, avec une solution à base de potasse KOH conformément au protocole décrit au point II ci-dessus. Le dernier a été conservé intact pour servir de référence.

L'état de surface de ces échantillons a été caractérisé de différentes façons avec :
- des observations des défauts diffusant à l'aide du système DMS,
- des mesures de rugosité à l'aide d'un rugosimètre optique,
- des mesures de rugosité à l'aide d'un microscope à force atomique AFM,
- des mesures d'énergie de surface et mouillabilité, et
- des mesures de tenue au flux laser.

### 111.2. Défauts observés par le système DMS.

Le système appelé DMS pour « Defects Mapping Sytem » consiste à éclairer l'échantillon par les tranches à l'aide d'un anneau de LED, puis à prendre un cliché de la surface de l'échantillon. Les défauts présents en surface diffusent la lumière des LED et apparaissent blancs sur la photo.

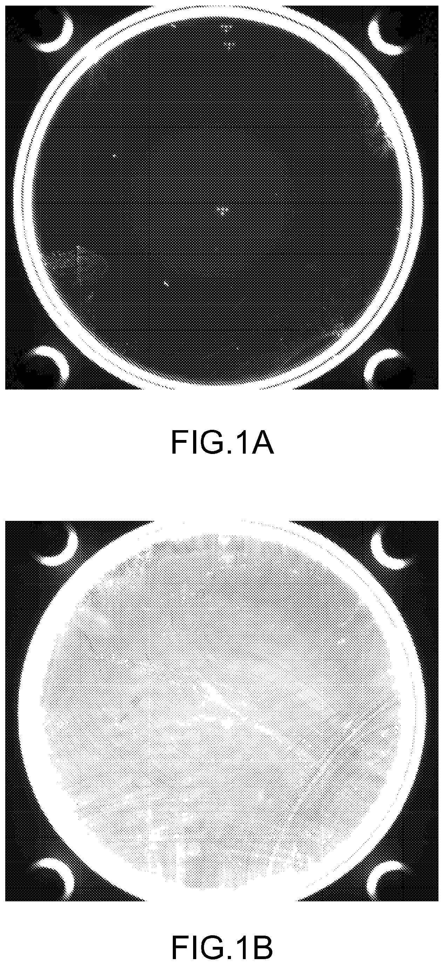

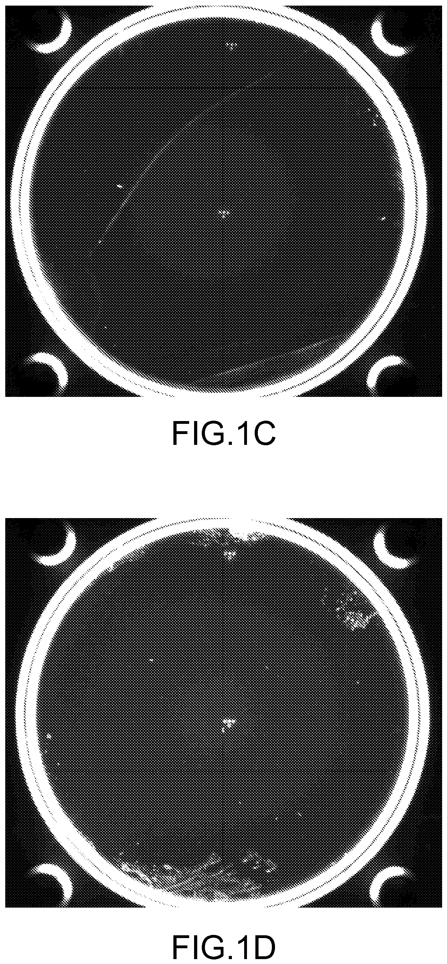

Des photos DMS rassemblés dans la Figure 1 ont été prises sur les échantillons traités chimiquement, avant (Figures 1A et Figure 1C) et après le traitement (Figure 1B et 1D) pour observer l'effet de celui-ci sur la quantité de défauts présents en surface.

Les points au centre et en haut des échantillons sont des indentations faites volontairement pour servir de repère. Elles ne sont pas à prendre en compte dans l'évolution de l'état de surface après les traitements chimiques.

On observe que l'état de surface de l'échantillon traité avec la solution à base d'acide fluorhydrique est fortement dégradé (Figure 1B). Le traitement au HF/HNO₃ a fait apparaître un voile blanc très diffusant et extrêmement visible avec ce système d'observation. A l'inverse, l'état de surface de l'échantillon traité avec la solution basique au KOH n'a pas été dégradé (Figure 1D). Les traces que l'on peut observer en bas et en haut à droite de l'échantillon après traitement sont des traces laissées par le nettoyage effectué après traitement.

### III.3. Rugosité.

### A. Étudiée à l'aide d'un rugosimètre optique.

Des mesures de rugosité ont été faites avant et après traitement à l'aide d'un rugosimètre optique.

L'appareil possède trois objectifs de grossissement différents pouvant observer des défauts de période spatiale allant de 1 mm à 1µm. Les valeurs présentées dans le Tableau 1 ci-dessous sont des valeurs de rugosité RMS.

**Tableau 1 : Mesures de rugosité RMS obtenues par rugosimètre optique sur les échantillons avant et après traitement**

| | Traitement à l'HF/HNO₃ | | |
|---|---|---|---|
| | **X1** Période spatiale entre 1 mm et 100 µm | **X10** Période spatiale entre 100 µm et 10 µm | **X100** Période spatiale entre 10 µm et 1µm |
| Avant | 0,4 nm | 0,2 nm | 0,4 nm |
| Après | 1,3 nm | 1,2 nm | 3,2 nm |

| | Traitement au KOH | | |
|---|---|---|---|
| | **X1** Période spatiale entre 1 mm et 100 µm | **X10** Période spatiale entre 100 µm et 10 µm | **X100** Période spatiale entre 10 µm et 1µm |
| Avant | 0,4 nm | 0,2 nm | 0,4 nm |
| Après | 0,3 nm | 0,2 nm | 0,2 nm |

Le traitement avec la solution acide à base d'HF/HNO₃ a dégradé la rugosité sur les trois gammes de période spatiale. La plus forte augmentation est observée à l'objectif xI00, c'est-à-dire pour les petites périodes. A l'inverse, le traitement basique au KOH n'a pas dégradé la rugosité. Ce traitement a même amélioré la rugosité mesurée à l'objectif xI00. On peut parler d'effet de « lissage chimique » du traitement objet de la présente invention.

### B. Étudiée à l'aide d'un microscope à force atomique (AFM).

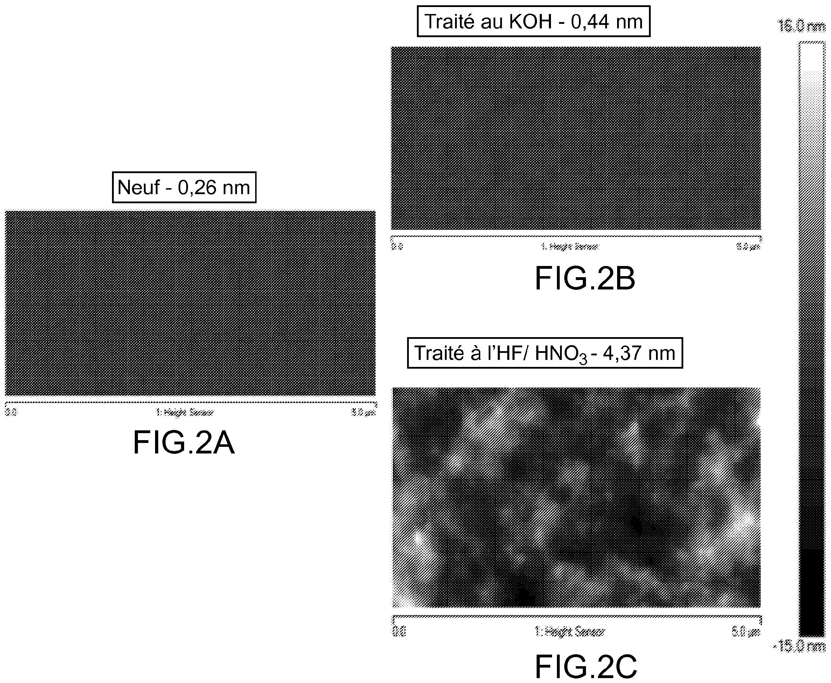

Des mesures de rugosité à l'échelle nanométrique ont été faites à l'aide d'un microscope à force atomique (AFM) sur les deux échantillons traités chimiquement et sur la référence neuve. La zone d'analyse mesure 5 µm x 2,5 µm. Les résultats sont présentés à la Figure 2 dans laquelle la valeur indiquée sur chaque image est la valeur de rugosité RMS sur la zone observée.

Le traitement au KOH (Figure 2B) a doublé la rugosité de la surface par rapport à la surface non traitée (Figure 2A), alors que le traitement acide à l'HF/HNO₃ (Figure 2C) l'a, quant à lui, multiplié par 20. Ces caractérisations sont cohérentes avec les mesures de rugosité présentées au point III.3.A ci-dessus qui montrent une très forte élévation de la rugosité avec ce type de traitement chimique acide et notamment sur les défauts de petites périodes spatiales (objectif x100).

### 111.4. Tension de surface et mouillabilité.

La tension de surface a été mesurée, pour chaque échantillon, 2h30 après le traitement chimique. La tension de surface (énergie de surface du verre) après le traitement au KOH (64 mN/m) est significativement plus élevée que pour l'échantillon traité acide à l'HF/HNO₃ (56 mN/m), ce qui témoigne d'une meilleure mouillabilité de la surface traitée au KOH.

### III.5. Tenue au flux laser.

Des tests de tenue au flux laser dans l'UV (355 nm) ont été menés sur ces échantillons. Les défauts comptabilisés sont les endommagements créés par le laser en face de sortie du composant.

La procédure de test utilisée a été du 10:1; c'est-à-dire que pour être déclaré « non endommagé » chaque site testé doit subir 10 tirs laser à une densité surfacique d'énergie (fluence) constante sans qu'il y ait apparition d'un défaut.

### Les courbes d'endommagement sont présentées à la Figure 3.

Il apparaît que l'échantillon traité avec la solution à base d'HF/HNO₃ n'a pas gagné en performances de tenue au flux laser. Au contraire, l'échantillon traité avec la solution basique au KOH a, quant à lui, diminué sa probabilité d'endommagement par rapport à la référence neuve (décalage de la courbe vers les fortes fluences). Le traitement au KOH a donc nettement amélioré les performances de tenue au flux laser.

### RÉFÉRENCES BIBLIOGRAPHIQUES

**[1]** Demande internationale WO 2013/071021 au nom de Corning Incorporated, publiée le 16 mai 2013.
**[2]** Demande internationale WO 98/07053 au nom de Corning Incorporated, publiée le 19 février 1998.
**[3]** Brevet US 6 099 389 au nom de United States Department of Energy, publié le 8 août 2000.
**[4]** Demande de brevet JP 2001-342041 au nom de Asahi Glass Co. Ltd, publiée le 11 décembre 2001.
**[5]** Ringlien et al, 1974, « An acid treatment for raising the surface damage threshold of laser glass », Appl. Phys. Lett., vol. 25, page 598.
**[6]** Battersby et al, 1998, « Effects of Wet Etch Processing on laser-Induced Damage of Fused Silica Surfaces », Proc. SPIE 3578, Laser-Induced Damage in Optical Materials; doi:10.1117/12.344412.
**[7]** Demande de brevet JP 2002-286902 au nom de Laser Gijtsu Sogo Kenkyusho et Nippon Sheet Glass Co. Ltd, publiée le 3 octobre 2002.
**[8]** Suratwala et al, 2010, « HF-based etching processes for improving laser damage résistance offused silica optical surfaces », J. Am. Ceram. Soc., DOI : 10.1111/j.1551-2916.2010.04112.
**[9]** Xu et al, 2015, « The Effect of Deep HF Etching on the Surface Quality and Figure of Fused Silica Optics », Proc. SPIE 9575, Optical Manufacturing and Testing XI, 95750P; doi:10.1117/12.2189079.
[10] Demande de brevet US 2011/079931 au nom de Miller et al, publiée le 7 avril 2011.
[11] Khan et al, 1978, « Etching of Glass Solid State Nuclear Track Detectors in Aqueous Solutions of (NH4)HF2, NaOH and KOH », International Journal of Applied Radiation and Isotopes, vol. 29, pages 229-232.
**[12]** Sakai et al, 2013, « Chemical etching using KOH aqueous solution for corona-charge micropatterning of soda-lime glass », Japanese Journal of Applied Physics, vol. 52, pages 036701.1-036701.4.
**[13]** Kiyama et al, 2009, « Examination of etching agent and etching mechanism on Femtosecond laser microfabrication of channels inside vitreous silica substrates », J. Phys. Chem. C, vol. 113, pages 11560-11566.
**[14]** Demande internationale WO 2015/052556 au nom de UAB « Optida » et State Research Institute Center for Physical Sciences and Technology, publiée le 16 avril 2015.
**[15]** Jensen et al, 2015, « Higher certainty of the laser induced damage threshold test with a redistributing data treatment », Review of Scientific Instruments, vol. 86, 103106 6.
**[16]** Demande internationale WO 2014/195472 au nom du CEA, publiée le 11 décembre 2014.
**[17]** Fascicule de brevet européen EP 0 693 186 B1 au nom du CEA, publié le 18 juin 1997.

## Revendications

1. Procédé pour améliorer les propriétés de tenue au flux laser d'un composant optique comprenant une étape consistant à mettre en contact ledit composant avec une solution aqueuse comprenant au moins un hydroxyde d'un métal alcalin ou d'un métal alcalino-terreux en une quantité en masse comprise entre 5 et 30% et présentant une température T comprise entre 50 et 100°C,
ledit composant optique étant en un matériau choisi dans le groupe constitué par un verre silicaté, un verre borosilicaté, un verre aluminosilicaté, un verre boroaluminosilicaté, une silice fondue et un verre à base de phosphate, et
ledit composant optique étant choisi dans le groupe constitué par les verres laser, les polariseurs, les miroirs, les lentilles, les optiques diffractives comme les réseaux et lames de phase, et les hublots.

2. Procédé selon la revendication 1, **caractérisé en ce que** ladite solution aqueuse est choisie parmi une solution aqueuse d'hydroxyde de sodium (NaOH), une solution aqueuse d'hydroxyde de potassium (KOH), une solution aqueuse d'hydroxyde de calcium (Ca(OH)₂), une solution aqueuse d'hydroxyde de lithium (LiOH), une solution aqueuse d'hydroxyde de césium (CsOH) et leurs mélanges.

3. Procédé selon la revendication 1 ou 2, **caractérisé en ce qu'**il comprend les étapes successives suivantes :
a) préparer une solution aqueuse comprenant au moins un hydroxyde d'un métal alcalin ou d'un métal alcalino-terreux en une quantité en masse comprise entre 5 et 30% et présentant une température T comprise entre 50 et 100°C ; et
b) mettre en contact le composant optique avec la solution préparée à l'étape (a), ladite mise en contact étant effectuée à ladite température T.

4. Procédé selon l'une quelconque des revendications 1 à 3, **caractérisé en ce que** ladite mise en contact consiste à plonger à la verticale et à maintenir à la verticale ledit composant optique dans ladite solution aqueuse comprenant au moins un hydroxyde d'un métal alcalin ou d'un métal alcalino-terreux.

5. Procédé selon l'une quelconque des revendications 1 à 4, **caractérisé en ce que** ladite mise en contact se fait sous agitation.

6. Procédé selon l'une quelconque des revendications 1 à 5, **caractérisé en ce que**, durant ladite mise en contact, le volume de ladite solution aqueuse comprenant au moins un hydroxyde d'un métal alcalin ou d'un métal alcalino-terreux est complété en permanence avec de l'eau ultra-pure ou déminéralisée, afin de compenser l'évaporation induite par la température de la solution supérieure à 50°C.

7. Procédé selon l'une quelconque des revendications 1 à 6, **caractérisé en ce que**, durant ladite mise en contact, la température de ladite solution aqueuse comprenant au moins un hydroxyde d'un métal alcalin ou d'un métal alcalino-terreux est maintenue à ladite température T.

## Patentansprüche

1. Verfahren zum Verbessern der Laserflussbeständigkeitseigenschaften eines optischen Bauteils, umfassend einen Schritt, der darin besteht, das Bauteil mit einer wässrigen Lösung in Kontakt zu bringen, die zumindest ein Hydroxid eines Alkalimetalls oder eines Erdalkalimetalls in einer Massenmenge zwischen 5 und 30 % enthält und eine Temperatur T zwischen 50 und 100°C aufweist,
wobei das optische Bauteil aus einem Material besteht, das ausgewählt ist aus der Gruppe bestehend aus Silikatglas, Borsilikatglas, Aluminosilikatglas, Boraluminosilikatglas, Quarzglas und Glas auf Phosphatbasis, und
wobei das optische Bauteil ausgewählt ist aus der Gruppe bestehend aus Lasergläsern, Polarisatoren, Spiegeln, Linsen, diffraktiven Optiken wie Gittern und Phasenplatten, und Sichtfenstern.

2. Verfahren nach Anspruch 1,
**dadurch gekennzeichnet, dass** die wässrige Lösung ausgewählt ist aus einer wässrigen Lösung von Natriumhydroxid (NaOH), einer wässrigen Lösung von Kaliumhydroxid (KOH), einer wässrigen Lösung von Calciumhydroxid (Ca(OH)₂), einer wässrigen Lösung von Lithiumhydroxid (LiOH), einer wässrigen Lösung von Cäsiumhydroxid (CsOH) und deren Gemischen.

3. Verfahren nach Anspruch 1 oder 2,
**dadurch gekennzeichnet, dass** es die nachstehenden aufeinanderfolgenden Schritte umfasst:
a) Herstellen einer wässrigen Lösung, die zumindest ein Hydroxid eines Alkalimetalls oder eines Erdalkalimetalls in einer Massenmenge zwischen 5 und 30 % enthält und eine Temperatur T zwischen 50 und 100 °C aufweist; und
b) Inkontaktbringen des optischen Bauteils mit der in Schritt (a) hergestellten Lösung, wobei das Inkontaktbringen bei der Temperatur T erfolgt.

4. Verfahren nach einem der Ansprüche 1 bis 3,
**dadurch gekennzeichnet, dass** das Inkontaktbringen darin besteht, das optische Bauteil vertikal in die wässrige Lösung, die zumindest ein Hydroxid eines Alkalimetalls oder eines Erdalkalimetalls enthält, einzutauchen und vertikal zu halten.

5. Verfahren nach einem der Ansprüche 1 bis 4,
**dadurch gekennzeichnet, dass** das Inkontaktbringen unter Rühren erfolgt.

6. Verfahren nach einem der Ansprüche 1 bis 5,
**dadurch gekennzeichnet, dass** während des Inkontaktbringens das Volumen der wässrigen Lösung, die zumindest ein Hydroxid eines Alkalimetalls oder eines Erdalkalimetalls enthält, ständig mit ultrareinem oder entmineralisiertem Wasser ergänzt wird, um die durch die Temperatur der Lösung über 50°C hervorgerufene Verdunstung auszugleichen.

7. Verfahren nach einem der Ansprüche 1 bis 6,
**dadurch gekennzeichnet, dass** während des Inkontaktbringens die Temperatur der wässrigen Lösung, die zumindest ein Hydroxid eines Alkalimetalls oder eines Erdalkalimetalls enthält, auf der Temperatur T gehalten wird.

## Claims

1. Method for improving the properties of laser flux resistance of an optical component, comprising a step consisting in placing said component in contact with an aqueous solution comprising at least one hydroxide of an alkaline metal or alkaline-earth metal in an amount of between 5 and 30 mass % and having a temperature T of between 50 and 100°C,
said optical component being in a material selected from the group consisting of silicate glass, borosilicate glass, aluminosilicate glass, boro-aluminosilicate glass, fused silica and phosphate glass, and
said optical component being selected from the group consisting of laser glass, polarizers, mirrors, lenses, diffractive optics such as phase gratings and wave plates, and view ports.

2. The method according to claim 1, **characterized in that** said aqueous solution is selected from among an aqueous solution of sodium hydroxide (NaOH), an aqueous solution of potassium hydroxide (KOH), an aqueous solution of calcium hydroxide (Ca(OH)₂), an aqueous solution of lithium hydroxide (LiOH), an aqueous solution of caesium hydroxide (CsOH) and mixtures thereof.

3. The method according to claim 1 or 2, **characterized in that** it comprises the following successive steps:
a) preparing an aqueous solution comprising at least one hydroxide of an alkaline metal or alkaline-earth metal in an amount of between 5 and 30 mass % and having a temperature T of between 50 and 100°C; and
b) contacting the optical component with the solution prepared at step (a), said contacting being conducted at said temperature T.

4. The method according to any of claims 1 to 3, **characterized in that** said contacting consisting in vertically immersing and vertically holding said optical component in said aqueous solution comprising at least one hydroxide of an alkaline metal or alkaline-earth metal.

5. The method according to any of claims 1 to 4, **characterized in that** said contacting is performed under agitation.

6. The method according to any of claims 1 to 5, **characterized in that**, throughout said contacting, the volume of said aqueous solution comprising at least one hydroxide of an alkaline metal or alkaline-earth metal is permanently completed with ultrapure or demineralized water to offset the evaporation induced by the temperature of the solution higher than 50°C.

7. The method according to any of claims 1 to 6, **characterized in that**, throughout said contacting, the temperature of said aqueous solution comprising at least one hydroxide of an alkaline metal or alkaline-earth metal is maintained at said temperature T.
